# EUROPÄISCHE PATENTANMELDUNG

(11) **EP 0 671 358 A2**
(43) Veröffentlichungstag der Anmeldung: **13.09.1995**
(21) Anmeldenummer: 95102576.6
(22) Anmeldetag: 23.02.1995
(51) Int. Cl.: C02F 1/76, B01D 53/34, C01B 11/02

(54) **Dihalogentetraoxidionen enthaltendes Oxidationsmittel, Verfahren zu seiner Herstellung und dessen Anwendung**

(30) Priorität: 23.02.1994 DE 4405800
(71) Anmelder: Khalaf, Bärbel, D-30900 Wedemark (DE); Küke, Fritz Dr., D-30629 Hannover (DE)
(72) Erfinder: Khalaf, Hosni Dr., D-30900 Wedemark (DE); Küke, Fritz Dr., D-30629 Hannover (DE)
(74) Vertreter: Cohausz & Florack

(57) **Zusammenfassung**

Ein Dihalogentetraoxidionen enthaltendes Oxidationsmittel wird hergestellt, indem man zu einer wäßrigen, Halogenitionen enthaltenden Lösung mit einem pH-Wert von größer als 10 ein Carbonat und ein Polyphosphat hinzufügt und die erhaltene Lösung mit einem oxidierenden Agens und einem Ampholyt versetzt. Das Oxidationsmittel kann zur Aufbereitung und Desinfektion von Schwimm- und Badebecken-, Trink-, Brauch- und Abwasser, zur Cyanidzerstörung und zur Oxidation reduzierender anorganischer und organischer Substanzen eingesetzt werden.

## Beschreibung

Die Erfindung betrifft eine Dihalogentetraoxidionen enthaltende Lösung, ein Verfahren zur Herstellung einer solchen Lösung sowie deren Anwendung zur Aufbereitung und Reinigung von Wässern, Abwässern und Abgasen.

Aufgrund ihrer oxidativen Wirkungen finden Chlordioxidlösungen zur Aufbereitung von Wasser zu Trinkwasserzwecken sowie von Badewasser in Schwimmbädern vielfältige Anwendung.

Aus der DE 27 28 170 C2 ist ein Verfahren zur Herstellung einer wäßrigen Chlordioxidlösung bekannt, in dem nacheinander ein Chlorit, ein Hypochlorit und ein Carbonat in Wasser gelöst werden und die erhaltene Lösung mit einer Säure auf einen schwach alkalischen pH-Wert eingestellt wird. Nach diesem Verfahren sollen sich Chlorit und Hypochlorit vollständig zu Chlordioxid umsetzen.

Gemäß DE 27 30 883 B2 wird eine wäßrige Chlordioxidlösung hergestellt, in dem ein Chlorit in Wasser gelöst und die erhaltene wäßrige Lösung durch Zugabe einer anorganischen Säure auf einen pH-Wert von etwa 4 angesäuert, diese Lösung anschließend mit einem Metallhydroxid auf einen pH-Wert von etwa 7,0 bis 7,2 eingestellt und zu der so erhaltenen wäßrigen Lösung ein Carbonat hinzugegeben wird.

Bei diesen Verfahren wird eine erhebliche Menge des gebildeten Chlordioxids aus den Lösungen ausgegast, und die Konzentration an Chlordioxid im Produkt ist unbefriedigend.

Aus der EP 136 309 B1 ist ein Verfahren zur Herstellung einer durch eine Peroxyverbindung stabilisierten alkalisch eingestelten wäßrigen Chloritlösung bekannt, in dem eine einen pH-Wert kleiner gleich 3 aufweisende, wäßrige sulfationenhaltige Lösung mit einer darin stabilen Peroxyverbindung versetzt und diese Lösung anschließend mit der wäßrigen, alkalischen Lösung eines Chlorits vermischt wird. Als besonders günstig wird es angesehen, wenn der pH-Wert der wäßrigen sulfationenhaltigen Lösung kleiner als 1 ist. Die Peroxyverbindung ist zur Stabilisierung des sich bildenden Chlordioxids in der noch stark sauren Phase erforderlich.

Es muß jedoch angenommen werden, daß durch die bei der Neutralisation auftretende Temperaturerhöhung ein negativer Einfluß auf die physikalische Löslichkeit des Chloridoxids ausgeübt und ferner eine hohe Disproportionierungsgeschwindigkeit von Chlorit zu Chlordioxid, Chlorat und Chlorid bewirkt wird. Das in dem pH-Bereich von kleiner als 4 entstehende Chlordioxid entweicht zu großen Teilen ungenutzt und kann bis zu einem pH-Wert von unter 7 nicht chemisch ausreichend stabilisiert bzw. gebunden werden.

Die Aufgabe der Erfindung bestand deshalb darin, ein Oxidationsmittel bereitzustellen, in dem das am stärksten oxidierend wirkende Mittel in einer höheren Konzentration vorliegt und über einen langen Zeitraum stabil ist.

Diese Aufgabe wird gelöst durch die Dihalogentetraoxid enthaltende Lösung nach Anspruch 1 sowie durch ein Verfahren zur Herstellung dieser Dihalogentetraoxidionen enthaltenden Lösung, in dem man einer wäßrigen Halogenitionen enthaltenden Lösung eines pH-Werts von größer als 7 ein Carbonat und ein Polyphosphat hinzufügt und die erhaltene Lösung mit einem oxidierenden Agens und einem Ampholyten versetzt.

Das hierbei durch Oxidation entstehende Halogendioxid kann sofort mit den überschüssigen Halogenitionen zu einem stabilen Komplex [Hal₂O₄]⁻ abreagieren, dessen physikalische und chemische Konstanten mit denen aus der Literatur übereinstimmen (Inorg. Nucl. Chem. Letters, 2 (1966) 395). Im Gegensatz zu dem Verfahren der EP 136 309 B1 erfolgt die Reaktion derart, daß der pH-Wert langsam von stark alkalisch auf einen pH-Wert von 7 bis 9 abnimmt. Dieser für die Haltbarkeit der erfindungsgemäßen Lösung optimale pH-Bereich wird durch den entstehenden Carbonat-Phosphatpuffer im Fortgang der Reaktion derart stabilisiert, daß dieser pH-Bereich nicht unterschritten wird.

Die Stabilität des erfindungsgemäß erhaltenen Oxidationsmittelsystems in Form einer Lösung kann durch die Bildung des oben genannten Komplexes sowie durch die Eigenschaft der Polyphosphate, die Ausgasung des Chlordioxid aus wäßrigen Lösungen zu unterdrücken, begründet werden.

Als erfindungsgemäß einzusetzende Chlorite, Polyphosphate oder Carbonate werden vorzugsweise Alkali- und/oder Erdalkalisalze eingesetzt. Bevorzugte Oxidationsmittel sind Alkali- und/oder Erdalkaliperoxodisulfate. Als Ampholyt wird vorzugsweise ein Alkali- und/oder Erdalkalihydrogensulfat eingesetzt.

Gemäß einer bevorzugten Ausführungsform der Erfindung gibt man zu 30 bis 50 Gew.% einer alkalischen, mit Wasser verdünnten 30%igen Chloritlösung, 0,3 bis 0,5 Gew.% eines Alkali- und/oder Erdalkalicarbonats und 0,15 bis 0,25 Gew.% eines Polyphosphats. Zu der erhaltenen wäßrigen Lösung werden anschließend 1 bis 5 Gew.% Alkali- oder Erdalkaliperoxodisulfat und 0,4 bis 0,6 Gew.% Alkalihydrogensulfat, die zuvor beide in Wasser gelöst worden waren, hinzugegeben.

Das erfindungsgemäße Oxidationsmittel ist eine, ein Dihalogentetraoxidionen, Halogenit und Puffersysteme enthaltende Lösung. Sie enthält gemäß einer bevorzugten Ausführungsform 0,8 bis 2 Gew.% Dihalogentetraoxid-, 4,7 bis 8,7 Gew.% Halogenit-, 1 bis 3 Gew.% Sulfat-, 1 bis 8 Gew.% Dihydrogenphosphat-/Hydrogenphosphat-, 0,2 bis 0,6 Gew.% Hydrogencarbonat-/Carbonat-, 14 bis 18 Gew.% Natrium- und 1 bis 2 Gew.% Chloridionen.

Gemäß einer weiteren bevorzugten Ausführungsform liegt das erfindungsgemäße Gemisch in einem Zweikomponenten-System, bestehend aus einem flüssigen Anteil, modifizierte Halogenitlösung und einem festen Anteil, Oxidationsmittel und Ampholyt, vor. Vor dem Gebrauch sind die Festsubstanzen in Wasser zu lösen und die erhaltene Lösung in die modifizierte Halogenitlösung einzumischen. Modifiziert bedeutet in diesem Zusammenhang, daß zu der Halogenitionen enthaltenden Lösung Carbonate, Polyphosphate und Wasser hinzugefügt wurden bzw. Wasser durch den Anwender noch hinzuzufügen ist.

Dieses Zweikomponenten-System hat für den Anwender den Vorteil, daß die Stabilität der Bestandteile nahezu unbegrenzt ist. Nach dem Vermischen der Bestandteile und einer Reaktionszeit von 30 bis 90 Minuten steht dem Anwender die vollständige Oxidationskraft in der erfindungsgemäß erhältlichen hohen Konzentration zur Verfügung.

Die oxidierende Wirkung der erfindungsgemäßen Lösung läßt sich durch Gegenwart von Metallionen wie Cu²⁺, Ni²⁺, Co²⁺, Fe³⁺ steigern. Diese Ionen katalysieren sowohl den Abbau der Metallkomplexe als auch die Nachbildung von [Hal₂O₄]⁻ aus der halogenithaltigen wäßrigen Lösung. Das Diahalogentetraoxid-Komplexion wird bei Anwendung in Kombination mit diesen Metallionen bis zum Halogenid reduziert, was einer vollständigen Ausnutzung der oxidativen Wirkung dieses Oxidationssystems entspricht. Dem Einsatz zusätzlicher Metallionen, insbesondere bei der Anwendung des erfindungsgemäßen Oxidationsmittels zur Cyanidzerstörung in Abwässern kommt dort große Bedeutung zu, wo sehr stabile Metallcyanokomplexe auftreten. Durch Zusatz von Fe³⁺ erfolgte eine schnelle Oxidation der komplexgebundenen Cyanide. Das erhaltene Metallkation liegt dann nicht mehr in komplexierter Form vor und kann als Hydroxid bzw. Sulfid gefällt oder durch Ionenaustausch entfernt werden.

Bisher werden Metallcyanokomplexe, wie sie in der Galvanikindustrie anfallen, mittels hypochlorithaltiger Lösungen zerstört. Nachteilig an diesem Verfahren ist der hohe Anteil an adsorbierbaren, eluierbaren organischen Halogenverbindungen (AOX/EOX-Wert), die durch Chlorierungsreaktionen von kohlenstoffhaltigen Verbindungen, wie CN⁻ mittels Hypochloriten entstehen. Im Gegensatz dazu sind AOX/EOX-Werte beim Einsatz des erfindungsgemäßen Oxidationsmittels vernachlässigbar gering.

Gemäß einer weiteren bevorzugten Ausführungsform kann die erfindungsgemäße oxidierende Lösung in einem elektrolytischen Verfahren zur Metallabscheidung aus cyanidhaltigen Wässern eingesetzt werden. Durch anodische Aktivierung des Oxidationsmittels können freie wie komplexgebundene Cyanide vollständig umgesetzt werden. Bei diesem Prozess wird gleichzeitig das Oxidationsmittel anodisch regeneriert, so daß es schon mit geringen Einsatzmengen der Lösung zu einer vollständigen Cyanidzerstörung kommt.

Zur Zerstörung von Cyanometallkomplexen, anderen Metallkomplexen und oxidierbaren Substanzen in Abwässern, die beispielsweise in der galvanischen Industrie anfallen, ist es vorteilhaft, ein Carbonat, ein Polyphosphat, ein oxidierendes Agens und einen Ampholyten in fester Form in den das Abwasser enthaltenden Reaktor zu geben und darin zu lösen. Anschließend wird die alkalische Halogenitlösung hinzugemischt.

Durch diese Verfahrensweise läßt sich ein Chlordioxid/Dichlortetraoxidionengemisch in situ in hoher Konzentration erzeugen, welches sich sofort mit den das Metall komplexierenden Liganden und anderen oxidierbaren Inhaltsstoffen, beispielsweise Cyaniden, umsetzen kann. Bei der Zerstörung von Cyaniden ist hierbei der pH-Wert zwischen 8 und 10 zu halten, um einerseits die Hydrolyse des sich bildenden Dicyans zu Cyanid und Cyanat hinreichend schnell erfolgen zu lassen, andererseits das Redoxpotential so hoch zu halten, um auch sehr stabile Cyanokomplexe zu zerstören.

Eine bevorzugte Anwendung des erfindungsgemäßen Oxidationsmittelsystems in Form einer Lösung liegt in der Verbesserung der Qualität des Schwimmbadwassers. Beim Einsatz auch in Kombination mit Chlor wird die Oxidationswirkung erhöht. Chloramine werden oxidativ zerstört, die Algen- und die Trihalogenmethanbildung unterbunden und eine stärkere Desinfektionswirkung erzielt. Auch Huminsäuren werden oxidativ verändert, so daß ihre stark adsorbierenden und flockenden Wirkungen erheblich eingeschränkt werden. Ferner wird ihre Chlorierung mittels Chlor in Gegenwart des erfindungsgemäßen Oxidationsmittels unterbunden. Diese Wirkungen führen zu Energie- und Wassereinsparungen und werden in offenen und in geschlossenen Systemen herbeigeführt.

Ein weiteres Einsatzgebiet ist die Reinigung von Abwässern und Abgasen durch Oxidation der darin enthaltenen Schadstoffe sowie die Desodorierung von Ab- und Umluft. Zahlreiche anorganische und organische Schadstoffe können oxidativ zerstört werden. Dazu gehören Phenole, aromatische Kohlenwasserstoffe, Alkene, Alkine, Alkohole, Aldehyde, Tertiäramine, Thiole, schwefelhaltige Proteine, aromatische und schwefelhaltige Aminosäuren. Ferner können Sulfide, Sulfite und Thiosulfate auch im pH-Bereich größer als 7 zu Sulfat oxidiert werden. Schadstoffe wie Schwefelwasserstoff oder Schwefeldioxid lassen sich leicht durch Einleiten in die erfindungsgemäß erhaltene Lösung ebenfalls zu Sulfat oxidieren. Diese Stoffe treten in Abwässern und Abgasen beispielsweise in der Fotoindustrie, der lederverarbeitenden Industrie und bei der Tierkörperverwertung auf.

Die Erfindung wird nachfolgend durch Beispiele erläutert.

### Beispiel 1

### Abtrennung von komplexgebundenen Nickel eines Tetracyanonickelat(II)-Komplexes durch oxidative Zerlegung

Ein Abwasser, welches 1,4 mg/l (=100%) Nickelionen und 25 mg/l Cyanidionen enthält, wird bei pH 9 mit 500 ml der erfindungsgemäßen Lösung pro m³ Abwasser versetzt. Die Lösung hat folgende Zusammensetzung:
0,065 M HCO₃⁻/CO₃²⁻
0,045 M H₂PO₄⁻/HPO₄²⁻
0,2 M SO₄²⁻
0,105 M Cl₂O₄⁻
1,0 M ClO₂
0,4 M Cl⁻²
Nach einer Reaktionsdauer von einer Stunde wird das Abwasser bei pH 6 über einen Kationenaustauscher geführt. Die Nickelkonzentration im Eluat wurde zu 0,4 mg/l (=29%) bestimmt. Die Nickelkonzentration ohne Einsatz des erfindungsgemäßen Oxidationsmittelgemischs war nach Behandlung mit dem Kationenaustauscher unverändert (= 100%).

### Beispiel 2

### Autokatalytischer Einfluß von Eisen(III)-ionen auf die Wirksamkeit der erfindungsgemäßen Lösung.

Zu 250 ml eines galvanischen Abwassers, welches 2680 mg/l Gesamtcyanid-, 558 mg/l(=100%) Kupfer- und 136 mg/l (=100%) Nickel enthält, werden bei pH 12,4 15 ml der oxidierenden Lösung und 1g Eisen(III)-sulfathydrat gegeben. Das Filtrat hat eine Kupferkonzentration von 1,6 mg/l (=0,3%) und eine Nickelkonzentration von 0,7 mg/l (=0,5%).

### Beispiel 3

### A. Anodische Oxidation ohne Zusatz der erfindungsgemäßen Lösung.

150 l eines galvanischen Abwassers aus einer Standspüle, welches 4680 mg/l Kupfer(I)-ionen (=100%) in einem Tetracyanocuprat(I)-komplex gebunden und zusätzlich noch 721,3 mg/l (=100%) freies Cyanid enthält, wird 24 Stunden lang bei einer konstanten Gleichspannung von 7,4 V elektrolysiert. Die Elektrolysezelle hat eine Höhe von 80 cm und einen Innendurchmesser von 20 cm. Die Kathode besteht aus Edelstahl (Höhe 76 cm) und setzt sich aus zwei Spiralfedern zusammen, wobei die kleinere Spiralfeder (Durchmesser 3,5 cm) von der größeren Spiralfeder (Durchmesser 5,5 cm) umgeben wird. Die Kathodenoberfläche beträgt 33,5 dm². Die Anode, die auf dem Innenmantel der Elektrolysezelle aufgebracht ist, besteht aus einem RuO₂ enthaltenden Mischoxid mit einer Oberfläche von 35,0 dm². Die Stromdichte während der Elektrolyse betrug 1,37 bis 1,7 A/dm². Nach Beendigung der Elektrolyse beträgt der Kupfergehalt der Lösung 1150 mg/l (=25%), der freie Cyanidgehalt stieg auf 953 mg/l (=132%) an.

### B. Anodische Oxidation mit Zusatz der oxidierenden Lösung.

In der unter A. beschriebenen Elektrolysezelle werden 120 l eines galvanischen Abwassers aus einer Standspüle, welches 5410 mg/l (=100%) Kupfer(I)-ionen als Tetracyanocuprat(I)-komplex gebunden und zusätzlich noch 996,3 mg/l freie Cyanide enthält, 23 Stunden lang bei einer konstanten Gleichspannung von 7,4 V elektrolysiert. Die Stromdichte beträgt 1,43 bis 1,94 A/dm². Erst nach sechsstündiger Elektrolysedauer wird 1 l der erfindungsgemäßen Lösung zugesetzt und 17 Stunden weiter elektrolysiert. Nach Beendigung der Elektrolyse beträgt die Kupferkonzentration 840 mg/l (=15%). Die freie Cyanidkonzentration sank auf 10 mg/l (=1%).

## Patentansprüche

1. Dihalogentetraoxidionen enthaltende wässrige Lösung mit folgender molarer Konzentrationen ihrer Bestandteile
0,03 bis 0,1 HCO₃⁻/CO₃²⁻;
0,01 bis 0,08 H₂PO₄⁻/HPO₄;
0,1 bis 0,3 SO₄;
0,06 bis 0,15 Cl₂O₄;
0,7 bis 1,3 C10₂⁻;
0,3 bis 0,5 Cl⁻.

2. Verfahren zur Herstellung der Dihalogentetraoxidionen enthaltenden Lösung nach Anspruch 1, dadurch gekennzeichnet, daß man einer wässrigen, Halogenitionen enthaltenden Lösung mit einem pH-Wert größer als 7, vorzugsweise größer oder gleich 10, ein Carbonat und ein Polyphosphat hinzufügt und die erhaltene Lösung mit einem oxidierenden Agens und einem Ampholyten versetzt.

3. Verfahren zur Zerstörung von Cyanometallkomplexen, Metallkomplexen und oxidierbaren Substanzen in Abwässern, dadurch gekennzeichnet, daß man ein Carbonat, ein Polyphosphat und ein oxidierendes Agens mit dem in einem Reaktor befindlichen Abwasser vermischt und anschließend eine alkalische Halogenitionen enthaltende Lösung zusetzt.

4. Verwendung der Lösung nach Anspruch 1 als Oxidationsmittel, Vorzugsweise zur Desinfektion von Wasser, zur Cyanidzerstörung in der galvanischen und metallverarbeitenden Industrie und zur Oxidation von Abwässern und Abgasen.

5. Verwendung der Lösung nach Anspruch 3 in Gegenwart von Übergangsmetallionen, vorzugsweise Cu²⁺, Ni²⁺, Co²⁺, Fe³⁺ zur Erhöhung der oxidativen Wirkung des Oxidationsmittels.
